# EUROPEAN PATENT APPLICATION

(11) **EP 4 592 970 A1**
(43) Date of publication of application: **30.07.2025**
(21) Application number: 25154164.5
(22) Date of filing: 27.01.2025
(51) Int. Cl.: G06V 10/774, G06V 30/19, G06V 30/414, G06V 30/418, G06V 10/772

(54) **METHODS AND SYSTEMS FOR GENERATING AND DEPLOYING FRAUD DETECTION TRAINING DATA FOR PHYSICAL IDENTIFICATION DOCUMENTS**

(30) Priority: 29.01.2024 US 202418425231
(71) Applicant: Onfido Ltd., London EC2A 1DX (GB)
(72) Inventor: MAHADEVAN, Mohan, London, EC2A 1DX (GB); DORGAN, Dimitrie, London, EC2A 1DX (GB); LAUNDY, Elizabeth, London, EC2A 1DX (GB); GIETEMA, Jochem, London, EC2A 1DX (GB); MOSELEY, Kai, London, EC2A 1DX (GB); ESCOBAR, Enzo, London, EC2A 1DX (GB); MAHE, Fabien, London, EC2A 1DX (GB); BOIS, Remi, London, EC2A 1DX (GB)
(74) Representative: Korenberg, Alexander Tal

(57) **Abstract**

Described herein are computerized methods and systems for generating and deploying fraud detection training data for physical identification documents. A server identifies a review image depicting a physical identification document to be validated, the document comprising areas of interest each associated with a fraud signal. The server generates a dataset comprising reference images, each depicting a reference document. The server aligns document features depicted in the review images and the reference images and crops each aligned image. The server identifies a fraud detection question for the cropped review image and displays the review image, the reference images, and the question in a user interface. The server receives a response to the fraud detection question and determines accuracy of the question based upon the response. The server labels the review image as genuine or fraudulent when the accuracy of the question is above a threshold.

## Description

### TECHNICAL FIELD

The subject matter of the application relates generally to methods and systems, including computer program products and related user interfaces, for generating and deploying fraud detection training data for physical identification documents.

### BACKGROUND

Verification of a person's identity is most often conducted using official documents, such as government-issued identification (ID) cards, passports, and other similar documents. In one example, to pass through a security checkpoint, a person may present one or more official documents as proof of identity to an assessor (e.g., a security guard, agent, etc.). The assessor verifies that the official documents are valid and authentic, usually by performing one or more standard checks such as viewing the document from one or more angles, scanning the document using a reader device and/or at different lightning conditions (e.g., ultraviolet, infrared, visible light, varying light intensities and focus conditions) and so forth. In another example, official documents may be presented to an assessor either in-person or virtually for access to a product or service, or execution of a transaction. To aid the assessor in verifying the authenticity of a document, many official documents include security features, such as optically-variable devices (OVDs), barcodes, Quick Response (QR) codes, machine readable zones (MRZs), in a particular configuration, format, or structural arrangement to indicate that the document is authentic and also make it increasingly difficult to tamper with or copy the security feature. The assessor can quickly look for the presence of these security features and decide whether the presented document is authentic or fraudulent. As can be appreciated, security features are difficult to reproduce faithfully for fraudulent actors and, in most cases (except for highly sophisticated actors), fake security features are often either missing, poorly reproduced, clearly fraudulent, or include erroneously reproduced characteristics or elements of the security feature on the original document.

However, due to advances in technology, document counterfeiting schemes have grown more robust in recent years. Many fake documents produced today may appear to be authentic to a human reviewer. Deepfake technology has advanced significantly, leveraging artificial intelligence techniques and advances in computing power to create synthetic images and videos of real people. In addition, digital on-boarding has increased substantially which requires verification of official documents over a network or otherwise without the actual physical document being presented to a human reviewer. Therefore, the need to accurately assess authenticity of physical identification documents is critical.

The sheer number of different ID documents, each with its own set of intrinsic features (e.g., printing techniques, text fields, fonts, security features), and extrinsic features (e.g., noise injected during the collection of image or video data of such documents-including reflections, blurriness, perspective changes, image resolution) makes accurate fraud detection difficult. On top of this, the variety of ways in which fraud can be perpetrated is also numerous-such as physical changes and reproduction methods, digital alterations and copying, etc. A simple example might be a teenager physically trying to change the year of birth on their driver's license. A more complex example might be a professional group of fraudsters using sophisticated deep fake software and digital editing techniques to modify the portrait on a government-issued passport document so that the person on the passport looks like someone else.

As can be appreciated, detection of fraud in physical identification documents is optimally effective when such detection is accurate and fast: accurate because companies are placed at substantial risk of monetary and reputational loss in the event that fraudsters get unauthorized access to certain services or resources, and fast because the ability to quickly authenticate and allow genuine users to access certain services or resources can directly relate to increased revenue--if the speed of verifying genuine users is slow, such users might not complete a transaction or workflow.

In addition to the above, human-machine interfaces to detect anomalies in data streams are an important component of modern-day software applications, including advanced machine learning infrastructures. As can be appreciated, the robustness and accuracy of trained machine learning models is generally limited by the size, labeling, and quality of the training data. To make sure that training data is of sufficient quality and has the right granularity of labels, organizations routinely employ application software that is operated by human analysts to review and manually label incoming data for inclusion in the corpus of training data. This type of software allows analysts to review input data, provide labels or annotations, validate labels on existing data, or other functions.

Although automatic labeling via machine learning models can help to decrease the number of images and data to be reviewed, an essential part of the quality of labels in training data is determined by the analysts who manually review and provide labeling for the data. These analysts are often experts in the field, having deep knowledge of how fraudsters will attempt to replicate documents and pass them off as genuine as well as having highly-advanced skills in detecting even the smallest variations in document appearance that indicate a likely fraud attempt. Specifically, such experts provide detailed insight into two major areas: 1) what are the areas of interest on every document under review, i.e. what should each of these areas look like when genuine, what are common (and perhaps uncommon) ways that each area can be altered in a fraudulent manner, and how might that alteration show up visually on the document; and 2) how should the question of determining genuine versus fraudulent documents be presented to a user of a fraud detection system such that the user can correctly and confidently decide that fraud is present, i.e., should the user be asked if a document area has the correct font, should the user be asked if the document area matches a reference image by placing them side-by-side, and which specific reference images should be presented to the user so they can make a good decision on fraud. As can be appreciated, there are only a small number of people that possess such knowledge and skill-which means scaling a fraud detection and labeling system to be used by a large number of (less-knowledgeable and skilled) operators without extensive training is very difficult.

Because the importance of human input is invaluable in the process of taking machine learning-based fraud detection products to a mature state, existing systems suffer from the above-described bottleneck of requiring expert knowledge in order to be used properly. As machine learning models generally work better when they are trained on more diverse data and on accurate labels, it is important to ensure that the labeling quality of analysts is optimal. Moreover, as machine learning models are data-hungry, there is an incentive to not only provide labels of high quality but also ensure that the labeling process is as efficient as possible as the human time required to review data is comparatively costly.

These requirements of a labeling system, namely, speed, quality, and scalability (scalable from one human to many without loss in speed or quality) pose challenges for the ones who design the system. Furthermore, human performance can vary over time, within a shift or from day to day and consistency is yet another requirement for reliability. First, ensuring accuracy in the quality of labels by human analysts generally requires extensive training procedures that can add significant costs to the entire process. This training process needs to be repeated on a regular basis to maintain consistency and can become outdated as label requirements change over time. Moreover, ensuring that the learned knowledge is actually used effectively in the labeling process can be challenging as knowledge can be easily applied incorrectly as general training procedures do not translate directly to the labeling software itself; there is generally a gap between the training and the way questions should be answered by human analysts. Second, the efficiency requirements impose challenges when it comes to the design of the system as the simplest way to reduce the time to label data is often to reduce the amount of information that analysts have to provide. However, this directly decreases the quality as the labels will be less precise. Then one can layer on the complexity of adaptability, scalability, direct inputs for ML model updates and consistency.

In view of the above challenges, there is a need for methods and systems, including a software application interface, which can be used to generate labeled image data for both training analysts in evaluating potential fraud and for training complex machine learning models to predict fraud. In both cases, the methods and systems must be able to produce labeled image data that can provide highly accurate fraud detection results.

### SUMMARY

Therefore, what is needed are computerized methods and systems for dynamically generating and deploying fraud detection training analysis data and related ground truth accuracy metrics, including but not limited to applications to detect fraud in physical identification documents. The techniques described herein overcome the above-identified challenges by providing methods and systems for dynamically generating fraud detection training data and accurate performance metrics in the context of physical identification documents. These methods and systems beneficially employ an advanced machine learning classification methodology to generate a user interface application for the efficient and accurate labeling and review of ID document image data for genuineness. The methods and systems described herein provide the following technical benefits over existing fraud detection labeling interfaces:

Accuracy - the quality of labels applied to images of physical ID documents is improved because fraud detection questions presented to reviewers are more specific and easier to answer-as a result, junior, relatively untrained analysts can perform at an accuracy level close to world-class domain experts as a result. More accurate results can be used to communicate performance metrics internally or externally. Because the user interface enables reviewers to consider and apply fraud detection labels independently for different areas of interest in a given ID document, the resulting labels are less biased, which leads to higher fraud classification accuracy. As can be appreciated, such bias is typically prevalent in existing labeling tools, as it is common for analysts to assume that one part of an ID document is fraudulent because another part of the document is clearly and verifiably fraudulent. By considering signals independently, this bias is avoided. Moreover, signals of the same document are not necessarily assessed by the same person, which further reduces the bias.

Speed - the techniques described herein produce an increase in the speed of the document labeling process because the unified question formulation and clear examples allow analysts to quickly spot differences between reference images and the image under review. As a result, the cognitive load of analysts is lower-meaning that less-experienced analysis can produce similar results as experts in the field-which can provide certain benefits, including scalability (experienced and less experienced analysts achieve a similar performance), reliability (over the course of a day, the performance of analysts is more consistent across the same analyst tasks), and adaptability (no prior training on document types is required, and analysts do not require expert information and training before they can start to use the interface).

In addition to the benefits described above with respect to selection of training data, the methods and systems described herein advantageously enable the generation of actionable metrics for monitoring the performance of external-facing and/or internal-facing fraud detection applications and services-at an enterprise level, a product team level, and an individual customer level. Also, it should be appreciated that the techniques described herein can be applied not only to document fraud detection but to other subject matters areas that benefit from anomaly detection-such as biometric fraud mitigation, medical image analysis to detect indicia of disease or illness, analyzing manufacturing images for parts inspection/defect detection, and so forth.

The invention, in one aspect, features a system for deploying fraud detection training data for physical identification documents. The system includes a server computing device with a memory for storing computer-executable instructions and a processor that executes the computer-executable instructions. The server computing device identifies a review image which depicts a physical identification document to be validated, the physical identification document comprising one or more areas of interest each associated with a fraud signal. The server computing device retrieves, for each review image, a dataset comprising a plurality of reference images, each reference image depicting a reference physical identification document, including selecting one or more reference images for inclusion in the dataset based upon a fraud detection prediction for the reference images as determined by a machine learning classification model. The server computing device aligns one or more document features depicted in the review images and the plurality of reference images and crop each aligned image according to one of the areas of interest, including determining a reference pose based upon the review image and transforming the plurality of reference images according to the reference pose. The server computing device identifies a fraud detection question for the cropped review image based upon the fraud signal associated with the area of interest in the cropped review image. The server computing device displays the cropped review image, the cropped reference images, and the fraud detection question in a user interface on an endpoint computing device. The server computing device receives a response to the fraud detection question from the endpoint computing device. The server computing device labels the review image as genuine or fraudulent based upon the response.

The invention, in another aspect, features a computerized method of deploying fraud detection training data for physical identification documents. A server computing device identifies a review image depicting a physical identification document to be validated, the physical identification document comprising one or more areas of interest each associated with a fraud signal. The server computing device retrieves, for each review image, a dataset comprising a plurality of reference images, each reference image depicting a reference physical identification document, including selecting one or more reference images for inclusion in the dataset based upon a fraud detection prediction for the reference images as determined by a machine learning classification model. The server computing device aligns one or more document features depicted in the review images and the plurality of reference images and crop each aligned image according to one of the areas of interest including determining a reference pose based upon the review image and transforming the plurality of reference images according to the reference pose. The server computing device identifies a fraud detection question for the cropped review image based upon the fraud signal associated with the area of interest in the cropped review image. The server computing device displays the cropped review image, the cropped reference images, and the fraud detection question in a user interface on an endpoint computing device. The server computing device receives a response to the fraud detection question from the endpoint computing device. The server computing device labels the review image as genuine or fraudulent based upon the response.

Any of the above aspects can include one or more of the following features. In some examples, each area of interest corresponds to a visual feature of the physical identification document. In some examples, each reference image depicts a reference physical identification document previously labeled as genuine or fraudulent. In some examples, selecting one or more reference images for inclusion in the dataset based upon a fraud detection prediction for the reference images as determined by a machine learning classification model comprises executing the machine learning classification model using the reference images as input to generate the fraud detection prediction for each reference image. In some examples, the user interface displays the cropped review image, the cropped reference images, and the fraud detection question in a single contiguous view.

In some examples, the fraud detection question comprises one or more criteria for evaluating whether the review image is genuine or fraudulent. In some examples, the response to the fraud detection question comprises a first indicator that the review image depicts a genuine physical identification document or a second indicator that the review image depicts a fraudulent physical identification document.

The invention, in another aspect, features a system for generating operational fraud detection training data for physical identification documents. The system includes a server computing device with a memory for storing computer-executable instructions and a processor that executes the computer-executable instructions. The server computing device identifies a review image depicting a physical identification document to be validated, the physical identification document comprising one or more areas of interest each associated with a fraud signal. The server computing device generates, for the review image, a dataset comprising a plurality of reference images, each reference image depicting a reference physical identification document, including selecting one or more reference images for inclusion in the dataset based upon a fraud detection prediction for the reference images as determined by a machine learning classification model. The server computing device aligns one or more document features depicted in the review image and the plurality of reference images and crop each aligned image according to one of the areas of interest. The server computing device associates a fraud detection question for the cropped review image based upon the fraud signal associated with the area of interest in the cropped review image. The server computing device displays the cropped review image, the cropped reference images, and the fraud detection question in a user interface to test users at a plurality of endpoint computing devices. The server computing device receives responses to the fraud detection question from each of the endpoint computing devices. The server computing device determines an accuracy of the fraud detection question based upon the responses. The server computing device labels the review image as genuine or fraudulent based upon the responses when the accuracy of the fraud detection question is above a predetermined threshold.

The invention, in another aspect, features a computerized method of generating operational fraud detection training data for physical identification documents. A server computing device identifies a review image depicting a physical identification document to be validated, the physical identification document comprising one or more areas of interest each associated with a fraud signal. The server computing device generates, for the review image, a dataset comprising a plurality of reference images, each reference image depicting a reference physical identification document, including selecting one or more reference images for inclusion in the dataset based upon a fraud detection prediction for the reference images as determined by a machine learning classification model. The server computing device aligns one or more document features depicted in the review image and the plurality of reference images and crop each aligned image according to one of the areas of interest. The server computing device associates a fraud detection question for the cropped review image based upon the fraud signal associated with the area of interest in the cropped review image. The server computing device displays the cropped review image, the cropped reference images, and the fraud detection question in a user interface to test users at a plurality of endpoint computing devices. The server computing device receives responses to the fraud detection question from each of the endpoint computing devices. The server computing device determines an accuracy of the fraud detection question based upon the responses. The server computing device labels the review image as genuine or fraudulent based upon the responses when the accuracy of the fraud detection question is above a predetermined threshold.

Any of the above aspects can include one or more of the following features. In some examples, determining an accuracy of the fraud detection question based upon the responses comprises comparing the responses to a corpus of pre-labeled response data, and generating an accuracy score for the fraud detection question based upon the comparison.

Other aspects and advantages of the invention will become apparent from the following detailed description, taken in conjunction with the accompanying drawings, illustrating the principles of the invention by way of example only.

### BRIEF DESCRIPTION OF THE DRAWINGS

The advantages of the invention described above, together with further advantages, may be better understood by referring to the following description taken in conjunction with the accompanying drawings. The drawings are not necessarily to scale, emphasis instead generally being placed upon illustrating the principles of the invention.
FIG. 1 is a block diagram of a system for generating and deploying operational fraud detection training data for physical identification documents.
FIG. 2A is a flow diagram of a computerized method of generating operational fraud detection training data for physical identification documents.
FIG. 3 is a diagram of exemplary review images depicting a physical ID document to be validated.
FIG. 4 is a diagram of exemplary areas of interest in a review image.
FIG. 5 is a diagram of an exemplary cropped image of an area of interest generated from an aligned image.
FIG. 6 is a diagram of an exemplary user interface for displaying the aligned, cropped images and the associated fraud detection question.
FIG. 7A is a diagram of an exemplary user interface for accuracy confirmation of a review image.
FIG. 7B is a diagram of an exemplary user interface for accuracy confirmation of the specific signal selected in FIG. 7A.
FIG. 8 is a flow diagram of a computerized method of deploying operational fraud detection training data for physical identification documents.

### DETAILED DESCRIPTION

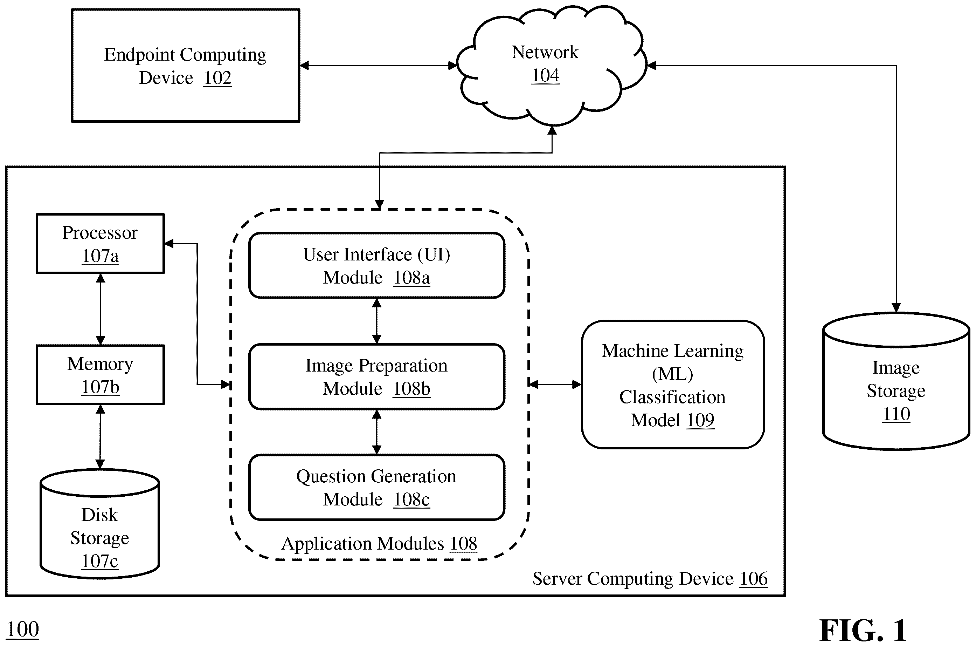

FIG. 1 is a block diagram of system 100 for generating and deploying fraud detection training data for physical identification documents to determine ground truth accuracy. System 100 includes endpoint computing device 102, communications network 104, server computing device 106 that includes processor 107a, memory 107b, disk storage 107c, application modules 108 (including user interface (UI) module 108a, image preparation module 108b, and question generation module 108c), and machine learning (ML) classification model 109. System 100 also includes image storage 110 coupled to communications network 104.

Endpoint computing device 102 connects to one or more communications networks (e.g., network 104) in order to communicate with server computing device 106 to provide input and receive output via one or more user interfaces relating to reviewing image data (e.g., images relating to physical identification documents) and providing feedback for detection of anomalies in the image data as described herein. Exemplary endpoint computing devices 102 include but are not limited to desktop computers, laptop computers, tablets, mobile devices, smartphones, and the like. In some examples, system 100 can include another server computing device (not shown), such as a web server, which provides an interface between endpoint computing device 102 and server computing device 106. It should be appreciated that other types of computing devices that are capable of connecting to the components of system 100 can be used without departing from the scope of the technology described herein. Although FIG. 1 depicts one endpoint computing device 102, it should be appreciated that system 100 can include any number of endpoint computing devices.

In some examples, endpoint computing device 102 is configured with application software which enables endpoint computing device 102 to establish a communication session with the server computing device 106 and display content received from server computing device 106 via UI module 108a. Such application software can include native application software and/or browser software. The native application can be a software application which is installed locally on endpoint computing device 102 and written with programmatic code designed to interact with an operating system that is native to the endpoint computing device 102. Such software may be available for download onto endpoint computing device 102 from one or more remote computing devices. The browser software executes on one or more processors of endpoint computing device 102, and enables endpoint computing device 102 to communicate via HTTP or HTTPS with server computing device 106 to receive content, such as one or more webpages that contain user interface content for rendering in the browser application and presentation on a display device coupled to endpoint computing device 102. Exemplary browser application software includes, but is not limited to, Firefox^{™}, Chrome^{™}, Safari^{™}, and other similar software. The one or more webpages can comprise visual and audio content for display to and interaction with a user of endpoint computing device 102, including application functionality for displaying images and related data to a user of endpoint computing device 102 and for receiving input from the user of endpoint computing device 102.

Communications network 104 enables other components of system 100 to communicate with each other in order to perform the process of generating fraud detection training data for physical identification documents as described herein. Network 104 may be a local network, such as a LAN, or a wide area network, such as the Internet and/or a cellular network. In some examples, network 104 is comprised of several discrete networks and/or sub-networks (e.g., cellular to Internet) that enable the components of system 100 to communicate with each other.

Server computing device 106 is a combination of hardware, including one or more special-purpose processors (e.g., processor 107a), one or more memory modules (e.g., memory 107b), data storage (e.g., disk storage 107c), and specialized software modules that, when executed, receive data from and transmit data to other components of system 100, and perform functions for generating fraud detection training data for physical identification documents as described herein. Server computing device 106 includes user interface (UI) module 108a, image preparation module 108b, and question generation module 108c (collectively, application modules 108), as well as machine learning (ML) classification model 109, that execute on and/or interact with the processor(s) 107a of server computing device 106. In some examples, application modules 108 and ML classification model 109 are specialized sets of computer software instructions programmed onto one or more dedicated processors (e.g., processor 107a) in server computing device 106 and can include specifically-designated memory locations and/or registers for executing the specialized computer software instructions. Although application modules 108 and ML classification model 109 shown in FIG. 1 as executing within one server computing device 106, in some examples the functionality of application modules 108 and ML classification model 109 can be distributed among a plurality of server computing devices. As shown in FIG. 1, server computing device 106 enables application modules 108 and ML classification model 109 to communicate with each other in order to exchange data for the purposes of performing the described functions. It should be appreciated that any number of computing devices, arranged in a variety of architectures, resources, and configurations (e.g., cluster computing, virtual computing, cloud computing) can be used without departing from the scope of the invention. Exemplary functionality of application modules 108 and ML classification model 109 is described in detail throughout the specification.

Image storage 110 is a computing device (or in some examples, a set of computing devices) coupled to server computing device 106 via network 104. Image storage 110 is configured to receive, generate, and store specific segments of data (such as image data) relating to the process of generating and deploying fraud detection training data for physical identification documents to determine ground truth accuracy as described herein. In some examples, all or a portion of image storage 110 can be integrated with server computing device 106 or be located on a separate computing device or devices. Image storage 110 can comprise one or more databases, repositories, file storage areas, and/or data warehouse platforms configured to store portions of data used by the other components of system 100, as will be described in greater detail below.

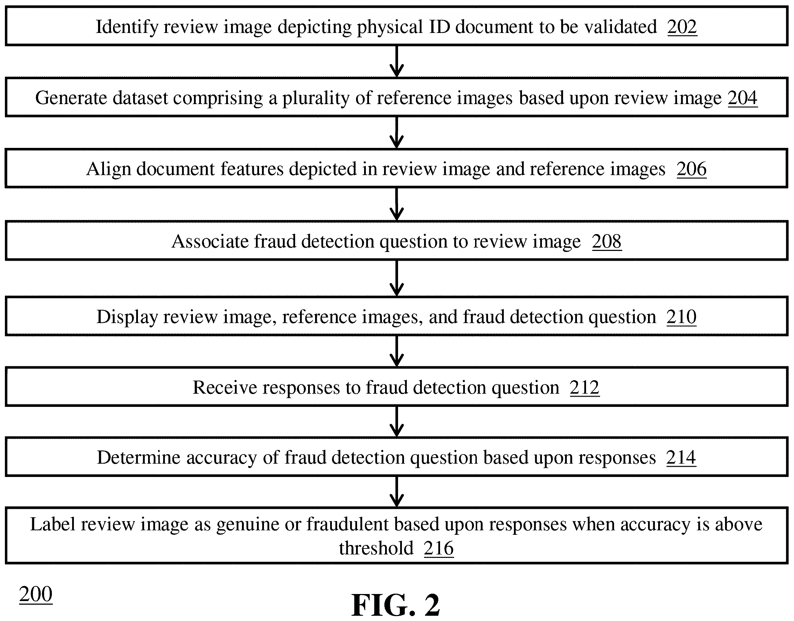

FIG. 2A is a flow diagram of computerized method 200 of generating operational fraud detection training data for physical identification documents, using system 100 of FIG. 1. Generally, prior to interaction with endpoint computing device 102, server computing device 106 selects an image dataset using one or more images of physical identification (ID) documents as stored in, e.g., image storage 110 for use with endpoint computing device 102. The image dataset comprises (i) a review image that depicts at least a portion of a physical ID document to be reviewed and validated by a user at endpoint computing device 102, and (ii) a plurality of reference images each depicting at least a portion of a reference physical ID document. The physical ID document depicted in the review image comprises one or more areas of interest (also called regions of interest) each associated with a fraud signal. As used herein, an area of interest is a portion of the physical ID document that may contain particular feature(s) or characteristic(s) that are relevant to determining whether the physical ID document is authentic. Exemplary features can include, but are not limited to, optically variable devices (OVDs), watermarks, text, pictures, images, formatting, and/or other graphical features. In some examples, a fraud signal for a certain area of interest may comprise information that, when visually analyzed, contains one or more differences from an authentic physical ID document that can indicate the physical ID document represented in the area of interest is not authentic. For example, fraud signals for an OVD on a physical ID document may be the shape of the OVD, the reflectivity of the OVD, the color composition or color spectrum of the OVD, the position of the OVD, and so forth. In some examples, a plurality of areas of interest in the physical document can each be separately authenticated and/or relational characteristics between the areas of interest can be analyzed holistically to make an authentication determination.

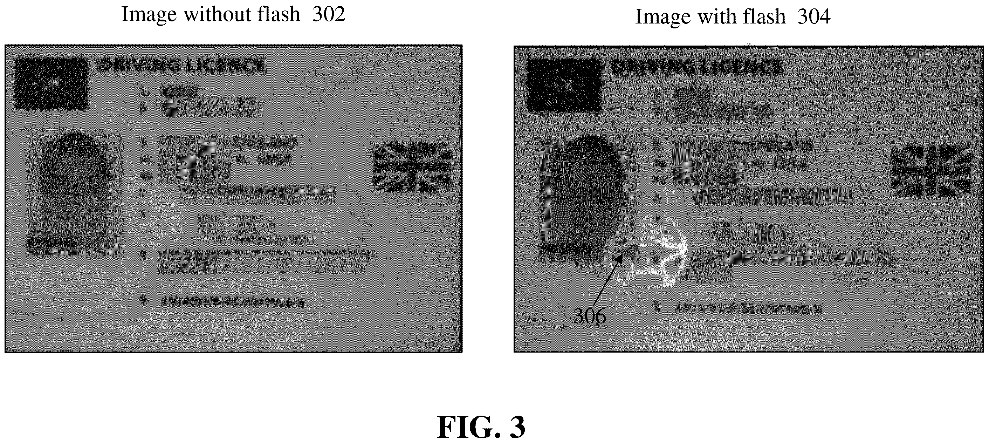

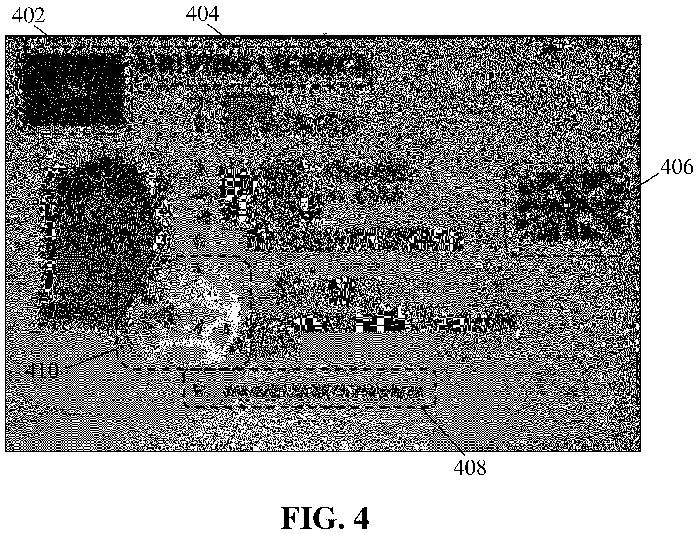

To select the image dataset, image preparation module 108b identifies (step 202) a review image depicting a physical ID document to be validated. As mentioned above, the physical ID document comprises one or more areas of interest each associated with a fraud signal. FIG. 3 is a diagram of exemplary review images 302, 304 depicting a physical ID document to be validated. Image 302 is an example of a physical ID document image where no flash was activated during image capture. Image 304 is an example of the physical ID document image where a flash was activated at high intensity during recording. As can be seen, image 304 includes a reflection 306 of an OVD (which is responding to the brightness of the flash) that is not seen in image 302. It should be appreciated that either image 302 or image 304 can be identified by module 108b as the review image to be validated. FIG. 4 is a diagram of exemplary areas of interest 402, 404, 406 in review image 304 from FIG. 3. As shown in FIG. 4, the areas of interest include but are not limited to graphical elements 402 and 406, text 404, 408, and OVD 410. In addition to the visual elements of each area of interest, fraud signals can be derived from the location/position of each individual area of interest in the image, as well as the relative position of each area of interest to each other in the overall image.

Once the review image is identified, image preparation module 108b generates (step 204) a dataset comprising a plurality of reference images to be used in associated with the review image. Each reference image depicts a physical ID document that, in some examples, is of the same or similar type as the document in the review image. For example, when the review image depicts a UK driving license, the plurality of reference images can also depict UK driving licenses. It should be appreciated that the reference images in the dataset generated by module 108b can depict physical ID documents that are either genuine or fraudulent.

In some examples, module 108b utilizes output from machine learning classification model 109 when generating the reference image dataset. ML classification model 109 is configured as a fraud detection model, which analyzes reference images stored in image storage 110 to generate a prediction of whether a reference image is genuine or fraudulent. Then, each reference image is labeled according to the prediction generated by model 109. Module 108b can select a plurality of images labeled as genuine by model 109 and a plurality of images labeled as fraudulent by model 109 for use in the reference image dataset. In some examples, ML classification model 109 comprises a deep learning classification model trained to generate a classification value (or predictive classification value) of genuineness or fraud associated with one or more areas of interest in the document and/or the entire document depicted in the input image. Further information describing the technical implementation of ML classification model is described in (a) U.S. Patent Application No. 17/688,572, titled "Methods and Systems for Authentication of a Physical Document," filed on March 7, 2022 and published as U.S. Patent Application Publication No. 2023/0281820 and (b) U.S. Patent Application No. 17/688,575, titled "Methods and Systems for Authentication of a Physical Document," filed on March 7, 2022 and published as U.S. Patent Application Publication No. 2023/0281821, each of which is incorporated herein by reference.

In some examples, image preparation module 108b selects reference images comprising a variety of different examples of fraud for inclusion in the reference image dataset. Module 108b can identify reference images in image storage 110 that are assigned the same document type as the review image and are further classified according to a type of fraud exhibited in the underlying document. For example, one or more reference images may be examples of a UK driving license with a fraudulent watermark, with each of these images depicting a different variation of fraud that may be present in the watermark. Module 108b can select a representative sample of each type or variation of fraud to be included in the reference image dataset. In some examples, module 108b determines a representative sample of each type or variation of fraud based upon, e.g., the classification value generated by ML classification model 109 when analyzing the reference images.

In addition to generation of the reference image dataset using the ML classification model 109 as described above, other methodologies can be used to select reference images for inclusion in the dataset. In some examples, one or more reference images stored in image storage 110 can be tagged as genuine or fraudulent using, e.g., manual input provided by one or more remote computing devices. For example, an expert reviewer at a remote computing device can analyze one or more reference images and provide input to remote computing device regarding the reviewer's opinion of whether the document depicted in the image is genuine or not. Module 108b can receive the reviewer's input and tag each of these images (e.g., by updating a metadata field in image storage 110 for each image) as comprising a fraudulent document or a genuine document.

Once the reference image dataset is generated, image preparation module 108b aligns (step 206) one or more document features depicted in the review image and the plurality of reference images. For example, module 108b can use the review image as a baseline for determining a reference pose of the physical ID document to be validated (and/or a reference pose of each area of interest). Module 108b can transform a pose of the area of interest in the reference images to align to the reference pose from the review image so that the area of interest in all images are in the same pose-which enables efficient and precise analysis of the area of interest. In some examples, module 108b can utilize document template data (e.g., sample images of known authentic physical ID documents and/or data that describes the pose/orientation/location of one or more areas of interest in an authentic physical ID document) to create the reference pose-and then align each of the review image and the reference images to the reference pose.

In some examples, image preparation module 108b is configured to employ a deep learning algorithm or framework on the review image and the reference images to perform the alignment to the reference pose. As one example, module 108b can be configured to execute a deep learning alignment pipeline comprising a convolutional neural network (CNN) that receives as input one or more captured frames (f) and one or more reference templates (t). For each frame-template pair (f, t), module 108b concatenates f and t into a 2-channel 3D image, then applies a plurality of 3D convolutional layers to capture hierarchical features of the input image pair, used to estimate a feature map (ϕ) for the input frame using a set of transformation parameters θ. In some examples, module 105d can use a ground truth feature map (ϕ') that has transformation parameters θ' to determine a supervised loss value between the sets of transformation parameters θ and θ'.

Module 108b then uses a spatial transformer to warp f to f o ϕ, which enables evaluation of the similarity of f o ϕ and t. Generally, the spatial transformer comprises a localization network, a grid generator, and a sampler. The localization network takes the input feature map ϕ from the CNN and regresses the transformation parameters θ to be applied to the feature map. In some examples, the localization network is a convolutional network or a fully-connected network, and comprises a final regression layer to produce the transformation parameters θ. The grid generator uses the transformation parameters θ to transform a set of sampling points of the input feature map into a target grid representation. It should be appreciated that the grid generator can use a number of different transformations (e.g., 2D affine, plane projective transformation, piecewise affine, thin plate spline, etc.). The sampler takes the set of sampling points from the grid generator along with the input feature map ϕ to produce a sampled output feature map (ϕ w) that is warped according to the transformation parameters θ . It should be appreciated that in some examples, the spatial transformer can be augmented with an attention mechanism that has the spatial transformation network deliberately focus on certain features of the input document (e.g., region of interest segmentation, bounding boxes, etc.). The attention mechanism has the benefit of making the image processing and transformation more computationally efficient.

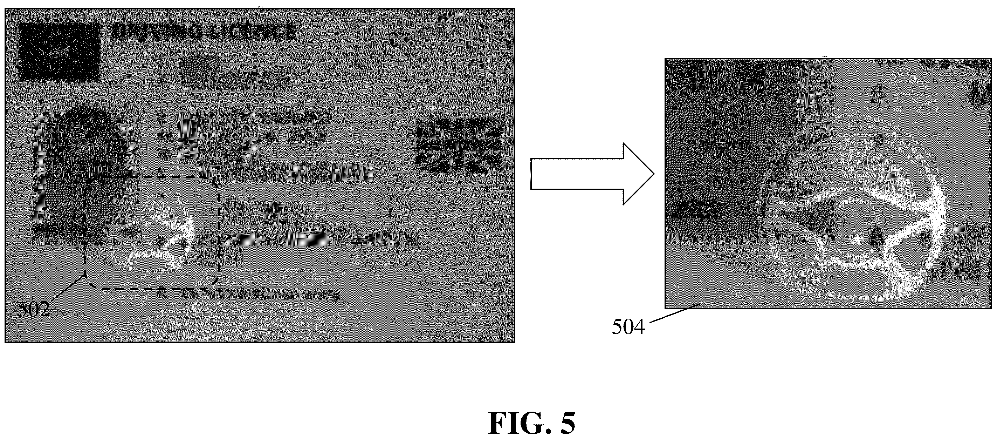

Module 108b is also configured to crop (step 206) each aligned image (including the review image and the reference images) according to one of the areas of interest. In some examples, module 108b retrieves a reference template for the document type from, e.g., memory 107b, disk storage 107c or image storage 110. The reference template can include labels for one or more areas of interest (i.e., OVDs) in the document that enable module 108b to quickly locate those areas. Module 108b can project the reference template onto the aligned image(s) and the labels (such as bounding boxes) corresponding to areas of interest can be used to crop the aligned images to isolate the areas of interest. FIG. 5 is a diagram of an exemplary cropped image of an area of interest generated from an aligned image. As shown in FIG. 5, module 108b identifies an area of interest 502 (e.g., using a reference template or reference document descriptor such as x-y coordinates of the area of interest) in a full document image and uses an image cropping algorithm to isolate and extract the identified area of interest from the full image-resulting in the cropped image 504.

After the images are aligned and cropped as described above, question generation module 108c associates (step 208) a fraud detection question for the cropped review image based upon the fraud signal associated with the area of interest in the cropped review image. As mentioned above, the fraud signal can comprise information that, when visually analyzed, contains one or more differences from an authentic physical ID document that can indicate the physical ID document represented in the area of interest is not authentic. In some examples, the review image is pre-labeled (e.g., by an expert reviewer) with one or more fraud signals assigned to certain areas of interest that indicate where the document might contain fraud. For example, the reviewer can designate specific visual elements in the review image that differ from the reviewer's knowledge of the corresponding authentic ID document as fraud signals. In another example, the reviewer can designate specific visual elements in the review image that correspond to aspects of a physical ID document that are difficult to accurately replicate and/or are often modified by fraudulent actors (e.g., photograph, OVD, watermark, coloring, graphical patterns, or other design elements) and as such, these aspects can be analyzed to detect fraud in a given example.

Question generation module 108c receives the assigned fraud signals for the review image and selects one or more fraud detection questions that correspond to the fraud signals. In some examples, the fraud signals are reviewed by an analyst for generation of fraud detection questions. For example, one or more analysts utilize their document expertise to generate a set of template fraud detection questions that are each associated with one or more of the fraud signals (i.e., an anomaly in the document as depicted in the review image, where the anomaly may indicate potential or actual fraud). Similarly, the analysts can generate one or more answers responsive to the fraud detection question based upon, e.g., ground truth data associated with the fraud signals. In one example, the ground truth data comprises labels (i.e., fraud or genuine) for each of the signals that have been verified by the analysts and applied to the signals. In some examples, the ground truth data can be passed through a testing phase with the analysts to determine the question responses and assess ground truth accuracy using any of a number of different metrics (e.g., false accept rate (FAR), false rejection rate (FRR)).

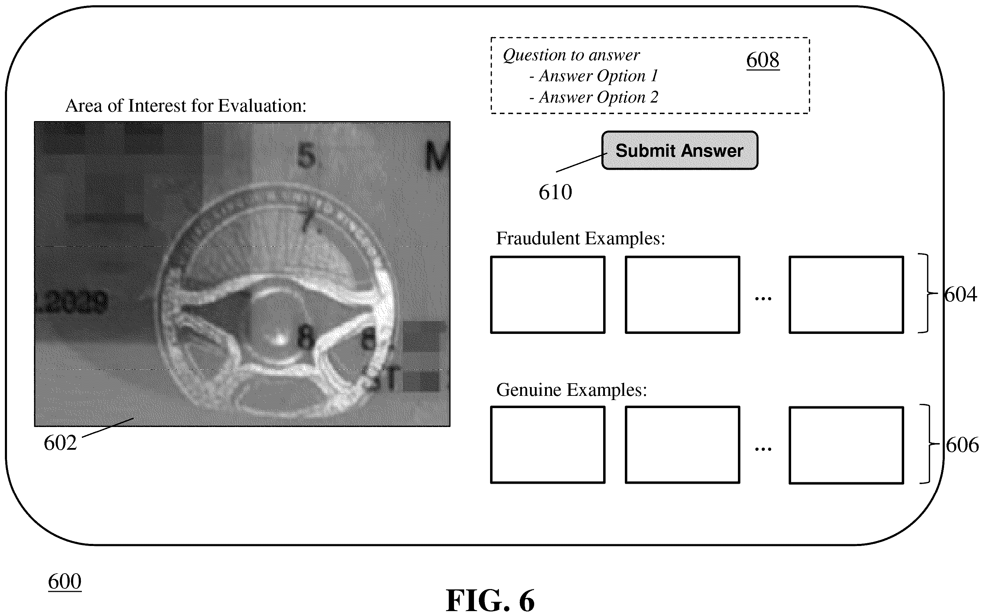

After generation of the aligned, cropped images and assignment of the associated fraud detection questions, users at endpoint computing devices 102 can establish communication sessions with UI module 108a of server computing device 106 to review images and related questions as part of a testing process to validate the accuracy of the selected reference images and fraud detection questions. In some examples, a user of endpoint computing device 102 can connect to, e.g., server computing device 106 via network 104 and launch application software to establish a communication session with UI module 108a. In response, UI module 108a can generate and display (step 210) a user interface that comprises the cropped review image, the cropped reference image(s), and the fraud detection question in a user interface on endpoint computing device 102. FIG. 6 is a diagram of an exemplary user interface 600 for displaying the aligned, cropped images and the associated fraud detection question(s). As shown in FIG. 6, user interface 600 includes the cropped review image 602 and the cropped reference images 604 and 606 arranged according to whether the reference images are fraudulent (604) or genuine (606). User interface 600 also includes section 608 that contains the fraud detection question along with a plurality of answer options from which the user can select. A user at endpoint computing device 102 can read the question and potential responses, review the images, and select one of the responses displayed in user interface 600. The user can then interact with button 610 to submit the response to server computing device 106. In some examples, user interface 600 comprises a single contiguous view where all of the relevant information that the user needs to perform the fraud analysis and evaluation of the review image is provided on one screen.

The activity of receiving responses to fraud detection questions can be conducted as part of a testing phase, where certain fraud detection questions are evaluated for accuracy in a testing environment prior to being deployed to production for use by a large number of users. UI module 108a receives (step 212) the submitted response to the fraud detection question and question generation module 108c and determines (step 214) an accuracy of the fraud detection question based upon the submitted response. In some examples, module 108c measures the accuracy of the fraud detection question using the response submitted by the user of endpoint computing device 102 and one or more aspects of prelabeled data associated with the review image.

As can be appreciated, when a particular question is determined to have a high level of accuracy (meaning that the question is accurately answered by users during the testing phase), system 100 can adopt the question for use in a production environment used to train analysts to detect fraud in physical ID documents. In some examples, module 108c can add the fraud detection question to a database of accepted fraud detection questions that are used for subsequent training purposes based upon the determined accuracy. For example, when the accuracy of the fraud detection question is above a predetermined threshold, module 108c can determine that the question should be added to a repository of questions that are utilized by modules 108 in a production environment when presenting training examples to other users at endpoint computing devices 102 as part of the training/onboarding regimen.

Conversely, when a particular fraud detection question is determined to have a low level of accuracy (meaning that users frequently provide an incorrect response to the question in the testing phase), system 100 can elect to discard the question and/or initiate a workflow that submits the question for re-evaluation and modification. For example, the fraud detection question and corresponding images can be reviewed by an expert to determine whether the question can be re-drafted to convey the information in a different way that would produce greater accuracy.

In some examples, user of endpoint computing devices 102 can connect to, e.g., server computing device 106 via network 104 and launch application software to establish a communication session with UI module 108a. In response, UI module 108a can generate and display (step 210) a user interface on each endpoint computing device that comprises cropped review images, cropped reference image(s), and associated fraud detection questions in a user interface on endpoint computing devices 102. FIG. 6 is a diagram of an exemplary user interface 600 for displaying the aligned, cropped images and the associated fraud detection question(s). As shown in FIG. 6, user interface 600 includes the cropped review image 602 and the cropped reference images 604 and 606 arranged according to whether the reference images are fraudulent (604) or genuine (606). User interface 600 also includes section 608 that contains the fraud detection question along with a plurality of answer options from which the user can select. A user at endpoint computing device 102 can read the question and potential responses, review the images, and select one of the responses displayed in user interface 600. The user can then interact with button 610 to submit the response to server computing device 106. In some examples, user interface 600 comprises a single contiguous view where all of the relevant information that the user needs to perform the fraud analysis and evaluation of the review image is provided on one screen.

UI module 108a receives (step 212) the responses to the fraud detection question from the endpoint computing devices and question generation module 108c determines (step 214) an accuracy of the fraud detection question based upon the responses. In addition, question generation module 108c labels (step 216) the review image as genuine or fraudulent based upon the responses received from endpoint computing device 102 when the determined accuracy is above the predetermined threshold. In this way, the review image is added to image storage 110 as a labeled image that can be used for a variety of purposes-including but not limited to use by server computing device 106 as a reference image in subsequent training processes, inclusion in a dataset for training one or more machine learning classification models (e.g., model 109) to generate fraud predictions, and so forth.

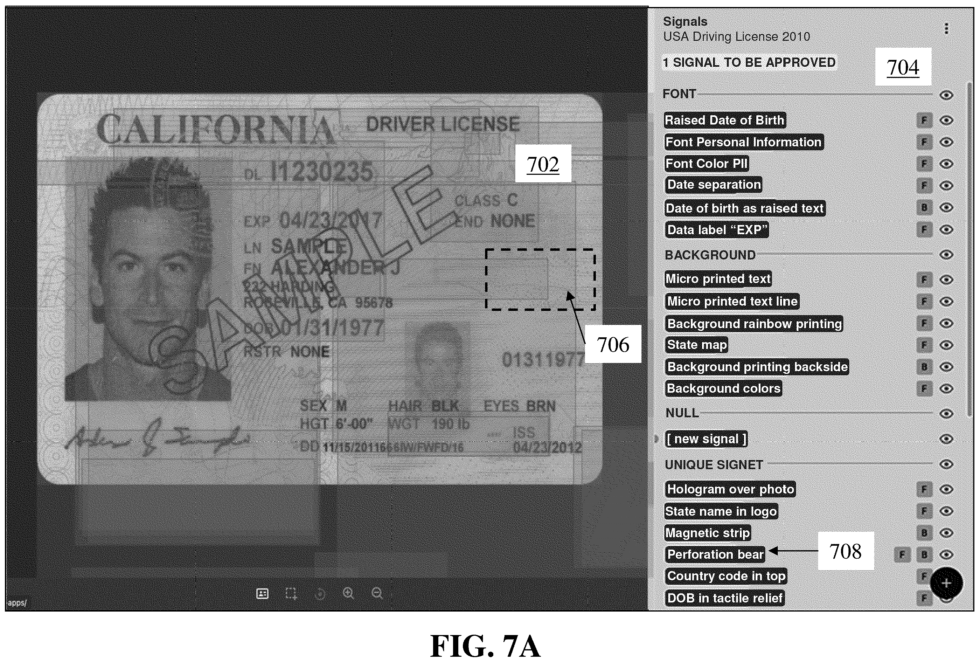

The methods and systems described herein can be beneficially utilized to provide confirmation of the ground truth accuracy of said labels. FIG. 7A is a diagram of an exemplary user interface for accuracy confirmation of a review image. As shown in FIG. 7A, user interface includes the review image 702 and a list of signals 704 associated with the review image that can be used by an analyst to determine whether the identification document in the review image 702 is genuine or fraudulent. Each of the signals 704 is associated with an annotation in the review image-in this example, each annotation comprises a bounding box (e.g., box 706) around a particular feature of the identification document. For example, box 706 corresponds to a 'perforation bear' signal-that is, the identification document includes a depiction of a bear with a dotted (or perforated) outline. A user at endpoint computing device 102 can select the Perforation bear user interface element 708 to review the signal in more detail.

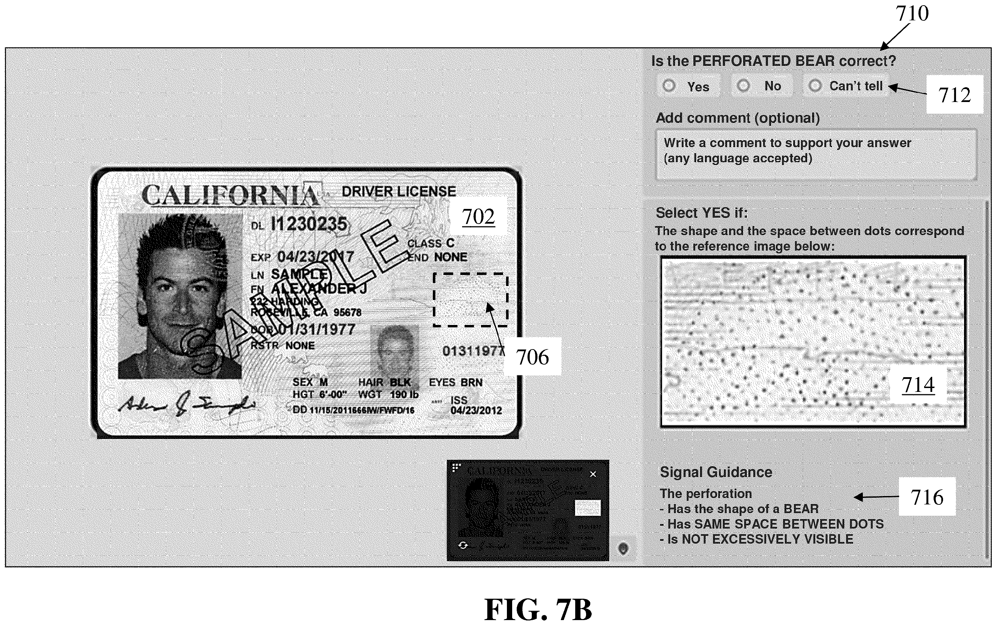

FIG. 7B is a diagram of a user interface for accuracy confirmation of the specific signal selected in FIG. 7A (i.e., the perforation bear signal). As shown in FIG. 7B, the user interface includes the review image 702 and the annotation 706 for the particular signal being analyzed at endpoint computing device 102. The user interface also includes a question 710 and a plurality of possible answers 712 relating to the signal-in this example, the question asks whether the perforation bear is correct, and the user can respond with Yes, No, or Can't Tell. Below the question and answers, the user interface provides a reference image 714 (e.g., a zoomed-in view of the particular signal from a known genuine identification document) and text 716 to guide the analyst during their review.

Questions that have an accuracy that is above a predetermined threshold can then be deployed, along with the associated reference images, to a production fraud detection environment, where analysts review images of potentially fraudulent documents and provide answers to the associated fraud detection questions using system 100. For example, certain fraud detection questions may consistently return accurate answers from testing users based upon the selected review image and reference images. When the accuracy rate of such questions is above a predetermined threshold (e.g., >75% of responses are correct), system 100 can deploy the questions and related images to a production environment for training of new analysts as described below.

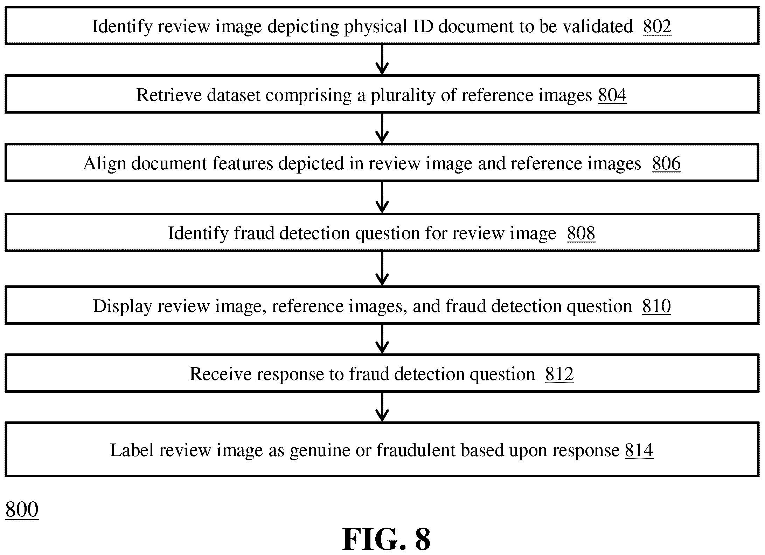

FIG. 8 is a flow diagram of a computerized method 800 of deploying operational fraud detection training data for physical identification documents, using system 100 of FIG. 1. Users (i.e., new analysts being trained in fraud detection) at endpoint computing devices 102 can establish a communication session with server computing device 106 and display content received from server computing device 106 via UI module 108a. Image preparation module 108b identifies (step 802) a review image depicting a physical ID document to be validated (see step 202 of FIG. 2 for details). Once the review image is identified, image preparation module 108b retrieves (step 804) a dataset comprising a plurality of reference images to be used in associated with the review image (see step 204 of FIG. 2 for details). In some examples, the review image and reference images are stored in image storage 110 for retrieval at run time.

Once the reference image dataset is retrieved from image storage 110, image preparation module 108b aligns (step 806) one or more document features depicted in the review image and the plurality of reference images (see step 204 of FIG. 2 for details). Then, question generation module 108c identifies (step 808) a fraud detection question for the cropped review image based upon the fraud signal associated with the area of interest in the cropped review image. As described above, fraud detection questions are generated during a testing phase and associated with reference images. An accuracy of the questions is evaluated during the testing phase and certain questions are then deployed to the production environment based upon the accuracy verification. Question generation module 108c can identify specific fraud detection questions for use in the production training process based upon the accuracy. In some examples, module 108c can utilize other criteria, in addition to accuracy, for determining when to deploy a fraud detection question to the production environment-such as document type, fraud signal type, document complexity, area of interest type, etc.-in order to provide onboarded analysts with a diversity of fraud examples to provide for more in-depth training.

UI module 108a generates and displays (step 810) a user interface that comprises the cropped review image, the cropped reference image(s), and the fraud detection question in a user interface on endpoint computing device 102 for interaction with the analysts being trained (see step 210 of FIG. 2 for details). The user at endpoint computing device 102 analyzes the fraud detection question in view of the reference images and review image as presented in the UI, and answers the question based upon their analysis. The user can interact with an element in the UI to answer the question and submit the answer to UI module 108a. UI module 108a receives (step 812) the submitted response to the fraud detection question and question generation module 108c labels (step 814) the review image as genuine or fraudulent based upon the responses received from endpoint computing device 102 (see step 216 of FIG. 2 for details). Using the method 800 of FIG. 8, system 100 can be utilized to provide a fraud detection training interface that has embedded expert knowledge-from both an image presentation and a question construction perspective-to enable lesser-trained or untrained users to quickly and efficiently assess identification documents for fraud and respond with focused answers for labeling of such documents.

The above-described techniques can be implemented in digital and/or analog electronic circuitry, or in computer hardware, firmware, software, or in combinations of them. The implementation can be as a computer program product, i.e., a computer program tangibly embodied in a machine-readable storage device, for execution by, or to control the operation of, a data processing apparatus, e.g., a programmable processor, a computer, and/or multiple computers. A computer program can be written in any form of computer or programming language, including source code, compiled code, interpreted code and/or machine code, and the computer program can be deployed in any form, including as a stand-alone program or as a subroutine, element, or other unit suitable for use in a computing environment. A computer program can be deployed to be executed on one computer or on multiple computers at one or more sites.

Method steps can be performed by one or more processors executing a computer program to perform functions of the technology by operating on input data and/or generating output data. Method steps can also be performed by, and an apparatus can be implemented as, special purpose logic circuitry, e.g., a FPGA (field programmable gate array), a FPAA (field-programmable analog array), a CPLD (complex programmable logic device), a PSoC (Programmable System-on-Chip), ASIP (application-specific instruction-set processor), or an ASIC (application-specific integrated circuit), or the like. Subroutines can refer to portions of the stored computer program and/or the processor, and/or the special circuitry that implement one or more functions.

Processors suitable for the execution of a computer program include, by way of example, both general and special purpose microprocessors, and any one or more processors of any kind of digital or analog computer. Generally, a processor receives instructions and data from a read-only memory or a random-access memory or both. The essential elements of a computer are a processor for executing instructions and one or more memory devices for storing instructions and/or data. Memory devices, such as a cache, can be used to temporarily store data. Memory devices can also be used for long-term data storage. Generally, a computer also includes, or is operatively coupled to receive data from or transfer data to, or both, one or more mass storage devices for storing data, e.g., magnetic, magneto-optical disks, or optical disks. A computer can also be operatively coupled to a communications network in order to receive instructions and/or data from the network and/or to transfer instructions and/or data to the network. Computer-readable storage mediums suitable for embodying computer program instructions and data include all forms of volatile and non-volatile memory, including by way of example semiconductor memory devices, e.g., DRAM, SRAM, EPROM, EEPROM, and flash memory devices; magnetic disks, e.g., internal hard disks or removable disks; magneto-optical disks; and optical disks, e.g., CD, DVD, HD-DVD, and Blu-ray disks. The processor and the memory can be supplemented by and/or incorporated in special purpose logic circuitry.

To provide for interaction with a user, the above described techniques can be implemented on a computer in communication with a display device, e.g., a CRT (cathode ray tube), plasma, or LCD (liquid crystal display) monitor, for displaying information to the user and a keyboard and a pointing device, e.g., a mouse, a trackball, a touchpad, or a motion sensor, by which the user can provide input to the computer (e.g., interact with a user interface element). Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, and/or tactile input.

The above-described techniques can be implemented in a distributed computing system that includes a back-end component. The back-end component can, for example, be a data server, a middleware component, and/or an application server. The above-described techniques can be implemented in a distributed computing system that includes a front-end component. The front-end component can, for example, be a client computer having a graphical user interface, a Web browser through which a user can interact with an example implementation, and/or other graphical user interfaces for a transmitting device. The above-described techniques can be implemented in a distributed computing system that includes any combination of such back-end, middleware, or front-end components.

The components of the computing system can be interconnected by transmission medium, which can include any form or medium of digital or analog data communication (e.g., a communication network). Transmission medium can include one or more packet-based networks and/or one or more circuit-based networks in any configuration. Packet-based networks can include, for example, the Internet, a carrier internet protocol (IP) network (e.g., local area network (LAN), wide area network (WAN), campus area network (CAN), metropolitan area network (MAN), home area network (HAN)), a private IP network, an IP private branch exchange (IPBX), a wireless network (e.g., radio access network (RAN), Bluetooth, Wi-Fi, WiMAX, general packet radio service (GPRS) network, HiperLAN), and/or other packet-based networks. Circuit-based networks can include, for example, the public switched telephone network (PSTN), a legacy private branch exchange (PBX), a wireless network (e.g., RAN, code-division multiple access (CDMA) network, time division multiple access (TDMA) network, global system for mobile communications (GSM) network), and/or other circuit-based networks.

Information transfer over transmission medium can be based on one or more communication protocols. Communication protocols can include, for example, Ethernet protocol, Internet Protocol (IP), Voice over IP (VOIP), a Peer-to-Peer (P2P) protocol, Hypertext Transfer Protocol (HTTP), Session Initiation Protocol (SIP), H.323, Media Gateway Control Protocol (MGCP), Signaling System #7 (SS7), a Global System for Mobile Communications (GSM) protocol, a Push-to-Talk (PTT) protocol, a PTT over Cellular (POC) protocol, and/or other communication protocols.

Devices of the computing system can include, for example, a computer, a computer with a browser device, a telephone, an IP phone, a mobile device (e.g., cellular phone, smartphone, personal digital assistant (PDA) device, laptop computer, electronic mail device), and/or other communication devices. The browser device includes, for example, a computer (e.g., desktop computer, laptop computer) with a World Wide Web browser (e.g., Microsoft^{®} Internet Explorer^{®} available from Microsoft Corporation, Mozilla^{®} Firefox available from Mozilla Corporation). Mobile computing devices include, for example, iOS^{™}-based devices such as the iPhone^{™} and iPad^{™} available from Apple, Inc., and Android^{™}-based devices such as the Galaxy^{™} available from Samsung Corp., the Pixel^{™} available from Google, Inc., and the Kindle Fire^{™} available from Amazon, Inc.

Comprise, include, and/or plural forms of each are open ended and include the listed parts and can include additional parts that are not listed. And/or is open ended and includes one or more of the listed parts and combinations of the listed parts.

One skilled in the art will realize the invention may be embodied in other specific forms without departing from the spirit or essential characteristics thereof. The foregoing examples are therefore to be considered in all respects illustrative rather than limiting of the invention described herein.

Some disclosed aspects and examples are set out in the following numbered clauses:
1. A system for deploying operational fraud detection training data for physical identification documents, the system comprising a server computing device with a memory for storing computer-executable instructions and a processor that executes the computer-executable instructions to:
   identify a review image depicting a physical identification document to be validated, the physical identification document comprising one or more areas of interest each associated with a fraud signal;
   retrieve, for the review image, a dataset comprising a plurality of reference images, each reference image depicting a reference physical identification document, including automatically selecting one or more reference images for inclusion in the dataset based upon a fraud detection prediction for the reference images as determined by a machine learning classification model;
   align one or more document features depicted in the review image and the plurality of reference images and crop each aligned image according to one of the areas of interest, including determining a reference pose based upon the review image and transforming the plurality of reference images according to the reference pose;
   identify a fraud detection question for the cropped review image based upon the fraud signal associated with the area of interest in the cropped review image;
   display the cropped review image, the cropped reference images, and the fraud detection question in a user interface on an endpoint computing device;
   receive a response to the fraud detection question from the endpoint computing device; and
   label the review image as genuine or fraudulent based upon the response.
2. The system of clause 1, wherein each area of interest corresponds to a visual feature of the physical identification document.
3. The system of clause 1, wherein each reference image depicts a reference physical identification document previously labeled as genuine or fraudulent.
4. The system of clause 1, wherein selecting one or more reference images for inclusion in the dataset based upon a fraud detection prediction for the reference images as determined by a machine learning classification model comprises:
   executing the machine learning classification model using the reference images as input to generate the fraud detection prediction for each reference image.
5. The system of clause 1, wherein the user interface displays the cropped review image, the cropped reference images, and the fraud detection question in a single contiguous view.
6. The system of clause 1, wherein the fraud detection question comprises one or more criteria for evaluating whether the review image is genuine or fraudulent.
7. The system of clause 6, wherein the response to the fraud detection question comprises a first indicator that the review image depicts a genuine physical identification document or a second indicator that the review image depicts a fraudulent physical identification document.
8. The system of clause 1, wherein the labeled review image is stored for use as a reference image.
9. A computerized method of deploying operational fraud detection training data for physical identification documents, the method comprising:
   identifying, by a server computing device, a review image depicting a physical identification document to be validated, the physical identification document comprising one or more areas of interest each associated with a fraud signal;
   retrieving, by the server computing device for the review image, a dataset comprising a plurality of reference images, each reference image depicting a reference physical identification document, including selecting one or more reference images for inclusion in the dataset based upon a fraud detection prediction for the reference images as determined by a machine learning classification model;
   aligning, by the server computing device, one or more document features depicted in the review image and the plurality of reference images and crop each aligned image according to one of the areas of interest, including determining a reference pose based upon the review image and transforming the plurality of reference images according to the reference pose;
   identifying, by the server computing device, a fraud detection question for the cropped review image based upon the fraud signal associated with the area of interest in the cropped review image;
   displaying, by the server computing device, the cropped review image, the cropped reference images, and the fraud detection question in a user interface on an endpoint computing device;
   receiving, by the server computing device, a response to the fraud detection question from the endpoint computing device; and
   labeling, by the server computing device, the review image as genuine or fraudulent based upon the response when the accuracy of the fraud detection question is above a predetermined threshold.
10. The method of clause 9, wherein each area of interest corresponds to a visual feature of the physical identification document.
11. The method of clause 9, wherein each reference image depicts a reference physical identification document previously labeled as genuine or fraudulent.
12. The method of clause 9, wherein selecting one or more reference images for inclusion in the dataset based upon a fraud detection prediction for the reference images as determined by a machine learning classification model comprises:
   executing the machine learning classification model using the reference images as input to generate the fraud detection prediction for each reference image.
13. The method of clause 9, wherein the user interface displays the cropped review image, the cropped reference images, and the fraud detection question in a single contiguous view.
14. The method of clause 9, wherein the fraud detection question comprises one or more criteria for evaluating whether the review image is genuine or fraudulent.
15. The method of clause 14, wherein the response to the fraud detection question comprises a first indicator that the review image depicts a genuine physical identification document or a second indicator that the review image depicts a fraudulent physical identification document.
16. The method of clause 9, wherein the labeled review image is stored for use as a reference image.
17. A system for generating operational fraud detection training data for physical identification documents, the system comprising a server computing device with a memory for storing computer-executable instructions and a processor that executes the computer-executable instructions to:
   identify a review image depicting a physical identification document to be validated, the physical identification document comprising one or more areas of interest each associated with a fraud signal;
   generate, for the review image, a dataset comprising a plurality of reference images, each reference image depicting a reference physical identification document, including selecting one or more reference images for inclusion in the dataset based upon a fraud detection prediction for the reference images as determined by a machine learning classification model;
   align one or more document features depicted in the review image and the plurality of reference images and crop each aligned image according to one of the areas of interest, including determining a reference pose based upon the review image and transforming the plurality of reference images according to the reference pose;
   associate a fraud detection question for the cropped review image based upon the fraud signal associated with the area of interest in the cropped review image;
   display the cropped review image, the cropped reference images, and the fraud detection question in a user interface to test users at a plurality of endpoint computing devices;
   receive responses to the fraud detection question from each of the endpoint computing devices;
   determine an accuracy of the fraud detection question based upon the responses; and
   label the review image as genuine or fraudulent based upon the responses when the accuracy of the fraud detection question is above a predetermined threshold.
18. The system of clause 17, wherein determining an accuracy of the fraud detection question based upon the responses comprises:
   comparing the responses to a corpus of pre-labeled response data; and
   generating an accuracy score for the fraud detection question based upon the comparison.
19. A computerized method of generating operational fraud detection training data for physical identification documents, the method comprising:
   identifying, by a server computing device, a review image depicting a physical identification document to be validated, the physical identification document comprising one or more areas of interest each associated with a fraud signal;
   generating, by the server computing device for the review image, a dataset comprising a plurality of reference images, each reference image depicting a reference physical identification document, including selecting one or more reference images for inclusion in the dataset based upon a fraud detection prediction for the reference images as determined by a machine learning classification model;
   aligning, by the server computing device, one or more document features depicted in the review image and the plurality of reference images and crop each aligned image according to one of the areas of interest, including determining a reference pose based upon the review image and transforming the plurality of reference images according to the reference pose;
   associating, by the server computing device, a fraud detection question for the cropped review image based upon the fraud signal associated with the area of interest in the cropped review image;
   displaying, by the server computing device, the cropped review image, the cropped reference images, and the fraud detection question in a user interface to test users at a plurality of endpoint computing devices;
   receiving, by the server computing device, responses to the fraud detection question from each of the endpoint computing devices;
   determining, by the server computing device, an accuracy of the fraud detection question based upon the responses; and
   labeling, by the server computing device, the review image as genuine or fraudulent based upon the responses when the accuracy of the fraud detection question is above a predetermined threshold.
20. The method of clause 19, wherein determining an accuracy of the fraud detection question based upon the responses comprises:
   comparing the responses to a corpus of pre-labeled response data; and
   generating an accuracy score for the fraud detection question based upon the comparison.

## Claims

1. A computerized method of deploying operational fraud detection training data for physical identification documents, the method comprising:
identifying, by a server computing device, a review image depicting a physical identification document to be validated, the physical identification document comprising one or more areas of interest each associated with a fraud signal;
retrieving, by the server computing device for the review image, a dataset comprising a plurality of reference images, each reference image depicting a reference physical identification document, including selecting one or more reference images for inclusion in the dataset based upon a fraud detection prediction for the reference images as determined by a machine learning classification model;
aligning, by the server computing device, one or more document features depicted in the review image and the plurality of reference images and crop each aligned image according to one of the areas of interest, including determining a reference pose based upon the review image and transforming the plurality of reference images according to the reference pose;
identifying, by the server computing device, a fraud detection question for the cropped review image based upon the fraud signal associated with the area of interest in the cropped review image;
displaying, by the server computing device, the cropped review image, the cropped reference images, and the fraud detection question in a user interface on an endpoint computing device;
receiving, by the server computing device, a response to the fraud detection question from the endpoint computing device; and
labeling, by the server computing device, the review image as genuine or fraudulent based upon the response.

2. The method of claim 1, wherein labeling, by the server computing device, the review image as genuine or fraudulent based upon the response comprises:
labelling, by the server computer device, the review image as genuine or fraudulent based upon the response when the accuracy of the fraud detection question is above a predetermined threshold.

3. The method of claim 1, wherein each area of interest corresponds to a visual feature of the physical identification document.

4. The method of claim 1, wherein each reference image depicts a reference physical identification document previously labeled as genuine or fraudulent.

5. The method of claim 1, wherein selecting one or more reference images for inclusion in the dataset based upon a fraud detection prediction for the reference images as determined by a machine learning classification model comprises:
executing the machine learning classification model using the reference images as input to generate the fraud detection prediction for each reference image.

6. The method of claim 1, wherein the user interface displays the cropped review image, the cropped reference images, and the fraud detection question in a single contiguous view.

7. The method of claim 1, wherein the fraud detection question comprises one or more criteria for evaluating whether the review image is genuine or fraudulent.

8. The method of claim 7, wherein the response to the fraud detection question comprises a first indicator that the review image depicts a genuine physical identification document or a second indicator that the review image depicts a fraudulent physical identification document.

9. The method of claim 1, wherein the labeled review image is stored for use as a reference image.

10. A system for deploying operational fraud detection training data for physical identification documents, the system comprising a server computing device with a memory for storing computer-executable instructions and a processor that executes the computer-executable instructions to perform the method of any of claims 1 to 9.

11. A computerized method of generating operational fraud detection training data for physical identification documents, the method comprising:
identifying, by a server computing device, a review image depicting a physical identification document to be validated, the physical identification document comprising one or more areas of interest each associated with a fraud signal;
generating, by the server computing device for the review image, a dataset comprising a plurality of reference images, each reference image depicting a reference physical identification document, including selecting one or more reference images for inclusion in the dataset based upon a fraud detection prediction for the reference images as determined by a machine learning classification model;
aligning, by the server computing device, one or more document features depicted in the review image and the plurality of reference images and crop each aligned image according to one of the areas of interest, including determining a reference pose based upon the review image and transforming the plurality of reference images according to the reference pose;
associating, by the server computing device, a fraud detection question for the cropped review image based upon the fraud signal associated with the area of interest in the cropped review image;
displaying, by the server computing device, the cropped review image, the cropped reference images, and the fraud detection question in a user interface to test users at a plurality of endpoint computing devices;
receiving, by the server computing device, responses to the fraud detection question from each of the endpoint computing devices;
determining, by the server computing device, an accuracy of the fraud detection question based upon the responses; and
labeling, by the server computing device, the review image as genuine or fraudulent based upon the responses when the accuracy of the fraud detection question is above a predetermined threshold.

12. The method of claim 11, wherein determining an accuracy of the fraud detection question based upon the responses comprises:
comparing the responses to a corpus of pre-labeled response data; and
generating an accuracy score for the fraud detection question based upon the comparison.

13. A system for generating operational fraud detection training data for physical identification documents, the system comprising a server computing device with a memory for storing computer-executable instructions and a processor that executes the computer-executable instructions to perform the method of claim 11 or 12.

14. A computer program comprising instructions which, when the program is executed by one or more processors, cause the one or more processors to perform the method of any of claims 1 to 9, 11 or 12.

15. A computer readable medium comprising instructions which, when executed by one or more processors, cause the one or more processors to perform the method of any of claims 1 to 9, 11 or 12.
